# EUROPEAN PATENT APPLICATION

(11) **EP 1 188 985 A2**
(43) Date of publication of application: **20.03.2002**
(21) Application number: 01114485.4
(22) Date of filing: 15.06.2001
(51) Int. Cl.: F21V 15/00, A47L 1/00

(54) **Illumination apparatus with cleaner, window with cleaner, and road indication apparatus with cleaner**

(30) Priority: 28.03.2001 JP 2001093489; 04.08.2000 JP 2000236591
(71) Applicant: Nakajima, Kenichi, Ashikaga-shi, Tochigi 326-0025 (JP)
(72) Inventor: Nakajima, Kenichi, Ashikaga-shi, Tochigi 326-0025 (JP)
(74) Representative: Grünecker, Kinkeldey, Stockmair & Schwanhäusser Anwaltssozietät

(57) **Abstract**

In an illumination apparatus for emitting light generated by a luminous body to the outside through a probe 106, a wiper cover 110 is attached to a smoothly rotating rotary ring 108 such that a brush 112 comes into contact with the outer columnar face of a lamp cover constituted by the probe 106, a bottom cap 105, and a head cap 107. Also, a wind receiving member 113 is attached to the wiper cover 110 such that a wind receiving surface becomes a plane perpendicular to a moving direction of the wiper cover 110.

## Description

### BACKGROUND OF THE INVENTION

### Field of the Invention

The present invention relates to an illumination apparatus, window, and road indication apparatus equipped with a cleaner powered by wind force and the like.

### Related Background Art

Covers for illumination apparatus such as streetlights and the like installed outdoors, surfaces of windows in contact with the outer air, and display surfaces of road indication apparatus such as road signs are exposed to wind and weather, so that various substances floating in the air such as dust, dirt, particles in exhaust gases, and the like, droppings of birds, cobwebs, and so forth adhere thereto, whereby they gradually get soiled, which lowers their transmittance to light (in case of illumination apparatus and windows) and makes it harder to see the sign (in case of load indication apparatus).

Therefore, it is necessary to periodically clean covers of outdoor illumination apparatus, exposed surfaces of windows, and display surfaces of road indication apparatus. However, there are an enormous number of outdoor illumination apparatus, windows, and road indication apparatus, and they are often installed at high elevations. Since a very large amount of labor and cost is necessary for periodically cleaning such outdoor illumination apparatus, windows, and road indication apparatus by manpower, they are not cleaned so often but only once in some years, for example, under present circumstances. Though streetlights are cleaned when replacing their lamps, lamp technologies have recently advanced, thereby developing long-life lamps, which elongate the cleaning intervals.

As a method of maintaining the transparency of covers of outdoor illumination apparatus and windows, and the visibility of display sections of road indication apparatus without incurring cost and labor, a cleaner continuously operable by utilizing wind force may be attached thereto. Such a conventional technique concerning the illumination apparatus, windows and road indication apparatus equipped with cleaners utilizing wind force is based on a concept in which a windmill having a plurality of blades continuously rotates in response to wind force, and this continuous rotary motion is converted into an action of a wipe member by way of a transmission.

### SUMMARY OF THE INVENTION

The system in which a wipe member is actuated by utilizing the continuous rotary motion of a windmill having a plurality of blades has been problematic in that a transmission having a complicated structure has to be incorporated therein in order to convert the high-speed continuous rotary motion of windmill into an appropriate action of the wipe member.

Therefore, it is an object of the present invention to provide an illumination apparatus, window and road indication apparatus equipped with the cleaner having a simple structure powered by wind force or the like.

For achieving the above-mentioned object, the illumination apparatus equipped with a cleaner in accordance with the present invention comprises a wind receiving member adapted to rotate when a wind is received by a wind receiving surface thereof, and a wipe member directly connected to the wind receiving member so as to be operable together with the wind receiving member while in contact with a cover of the illumination apparatus.

As a consequence of such a configuration, if the wind receiving member is blown by a wind, then a wind pressure is exerted on the wind receiving surface, so that the wind receiving member rotates, whereby the wipe member moves together with the wind receiving member while in contact with the cover of illumination apparatus.

While the wind receiving member continues its rotary motion until the wind receiving surface is oriented in a direction receiving no wind pressure, its orientation is fixed once the wind receiving surface is oriented in that direction unless the wind direction changes. Unlike windmills which are continuously accelerated when a wind keeps blowing against windmills, the wind receiving member is accelerated only until the wind receiving surface is oriented in the direction in which the wind receiving surface receives no wind pressure, whereby the wind receiving member rotates intermittently in a gentle manner. As a consequence, the wind receiving member and the wipe member can be directly connected to each other without the aid of a transmission, such that the wind receiving member and the wipe member can be linked to each other by a shaft, for example, whereby the cleaner simplifies its structure.

For achieving the above-mentioned object, the window equipped with a cleaner in accordance with the present invention comprises a wind receiving member adapted to rotate when a wind is received by a wind receiving surface thereof, and a wipe member directly connected to the wind receiving member so as to be operable together with the wind receiving member while in contact with a surface of the window.

As a consequence of such a configuration, if the wind receiving member is blown by a wind, then a wind pressure is exerted on the wind receiving surface, so that the wind receiving member rotates, whereby the wipe member moves together with the wind receiving member while in contact with the window surface.

While the wind receiving member continues its rotary motion until the wind receiving surface is oriented in a direction receiving no wind pressure, its orientation is fixed once the wind receiving surface is oriented in that direction unless the wind direction changes. Unlike windmills which are continuously accelerated when a wind keeps blowing against windmills, the wind receiving member is accelerated only until the wind receiving surface is oriented in the direction in which the wind receiving surface receives no wind pressure, whereby the wind receiving member rotates intermittently in a gentle manner. As a consequence, the wind receiving member and the wipe member can be directly connected to each other without the aid of a transmission, such that the wind receiving member and the wipe member can be linked to each other by a shaft, for example, whereby the cleaner simplifies its structure.

For achieving the above-mentioned object, the road indication apparatus equipped with a cleaner in accordance with the present invention comprises a wind receiving member adapted to rotate when a wind is received by a wind receiving surface thereof, and a wipe member directly connected to the wind receiving member so as to be operable together with the wind receiving member while in contact with a surface of a display section.

As a consequence of such a configuration, if the wind receiving member is blown by a wind, then a wind pressure is exerted on the wind receiving surface, so that the wind receiving member rotates, whereby the wipe member moves together with the wind receiving member while in contact with the surface of display section.

While the wind receiving member continues its rotary motion until the wind receiving surface is oriented in a direction receiving no wind pressure, its orientation is fixed once the wind receiving surface is oriented in that direction unless the wind direction changes. Unlike windmills which are continuously accelerated when a wind keeps blowing against windmills, the wind receiving member is accelerated only until the wind receiving surface is oriented in the direction in which the wind receiving surface receives no wind pressure, whereby the wind receiving member rotates intermittently in a gentle manner. As a consequence, the wind receiving member and the wipe member can be directly connected to each other without the aid of a transmission, such that the wind receiving member and the wipe member can be linked to each other by a shaft, for example, whereby the cleaner simplifies its structure.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1 is a perspective view showing the illumination apparatus equipped with a cleaner in accordance with a first embodiment of the present invention;
Fig. 2 is a partly sectional view of the illumination apparatus equipped with a cleaner shown in Fig. 1;
Fig. 3 is a perspective view showing the illumination apparatus equipped with a cleaner in accordance with a second embodiment of the present invention;
Fig. 4 is a partly sectional view of the illumination apparatus equipped with a cleaner shown in Fig. 3;
Fig. 5 is a partly sectional view of the illumination apparatus equipped with a cleaner shown in Fig. 3 taken along the line A-A;
Fig. 6 is a view of a cleaner section alone taken out from the illumination apparatus equipped with a cleaner shown in Fig. 3;
Fig. 7 is a front view showing the illumination apparatus equipped with a cleaner in accordance with a third embodiment of the present invention;
Fig. 8 is a side view of the illumination apparatus equipped with a cleaner shown in Fig. 7;
Fig. 9 is an enlarged partly sectional view of the illumination apparatus equipped with a cleaner shown in Fig. 7 taken along the line A-A;
Fig. 10 is a side view showing the window equipped with a cleaner in accordance with a fourth embodiment of the present invention;
Fig. 11 is a plan view of the window equipped with a cleaner shown in Fig. 10;
Fig. 12 is an enlarged partly sectional view of the window equipped with a cleaner shown in Fig. 10 taken along the line A-A;
Fig. 13 is a front view showing the window equipped with a cleaner in accordance with a fifth embodiment of the present invention;
Fig. 14 is a side view of the window equipped with a cleaner shown in Fig. 13;
Fig. 15 is an enlarged partly sectional view of the window equipped with a cleaner shown in Fig. 13 taken along the line A-A;
Fig. 16 is a sectional side view of the road indication apparatus equipped with a cleaner in accordance with a sixth embodiment of the present invention;
Fig. 17 is a lateral sectional view of the road indication apparatus equipped with a cleaner shown in Fig. 16;
Fig. 18 is a perspective view of the exterior of the road indication apparatus equipped with a cleaner shown in Fig. 16;
Fig. 19 is a side view of the road indication apparatus equipped with a cleaner shown in Fig. 16;
Fig. 20 is a sectional side view of the road indication apparatus equipped with a cleaner in accordance with a seventh embodiment of the present invention;
Fig. 21 is a front view of the road indication apparatus equipped with a cleaner shown in Fig. 20; and
Fig. 22 is a side view of the road indication apparatus equipped with a cleaner shown in Fig. 20.

### DESCRIPTION OF THE PREFERRED EMBODIMENTS

In the following, preferred embodiments of the illumination apparatus equipped with a cleaner, the window equipped with a cleaner, and the road indication apparatus equipped with a cleaner in accordance with the present invention will be explained with reference to the accompanying drawings.

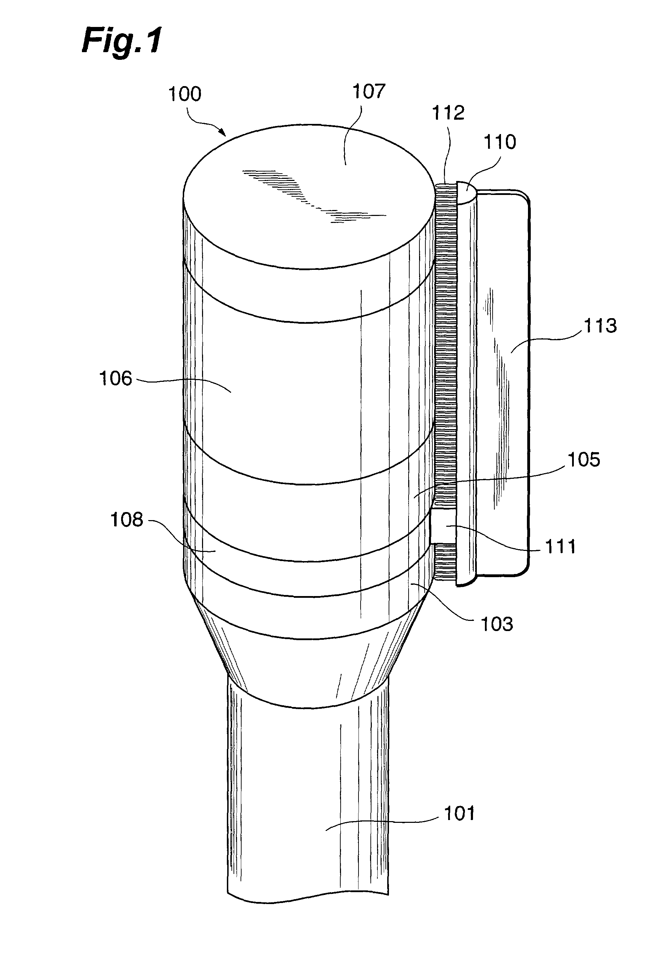

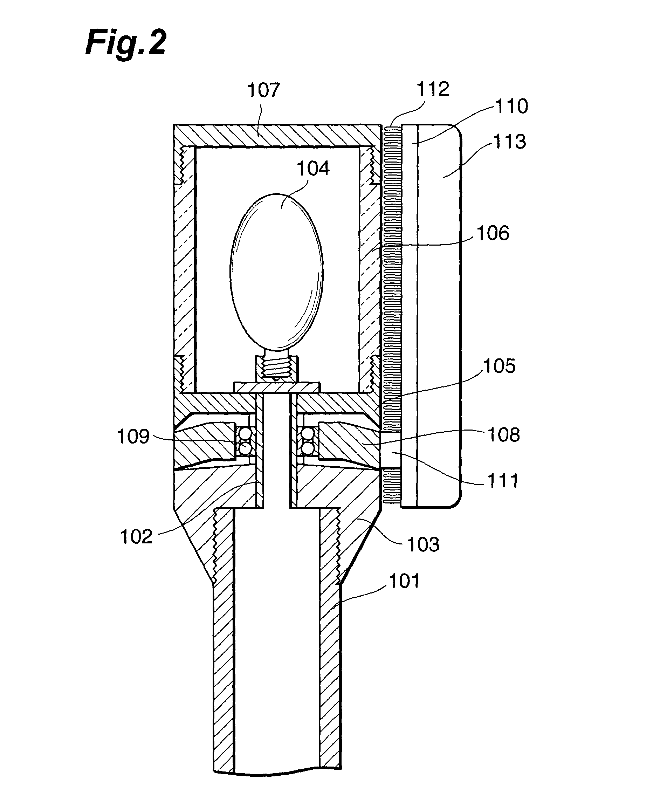

Fig. 1 is a perspective view showing the illumination apparatus equipped with a cleaner in accordance with a first embodiment of the present invention, whereas Fig. 2 is a partly sectional view of the illumination apparatus equipped with a cleaner shown in Fig. 1. In a streetlight 100 exemplified here, a cylindrical lamp cover is provided in a vertical direction. A column 102, which is a pillar for the lamp within the streetlight main body, is firmly attached to a streetlight mounting pipe 101, which is a pillar for the streetlight main body, by a pipe attachment 103, whereas a lamp 104 having a luminous body therewithin is attached to a leading end of the column 102. A bottom cap 105 for securing a probe, which will be explained later, is attached to the upper part of the columnar face of the column 102, whereby a cylindrical probe 106 is secured onto the bottom cap 105. The probe 106 is made of a transparent material, through which light generated by the luminous body is emitted to the outside. The upper part of probe 106 is covered with a head cap 107, whereby the probe 106, bottom cap 105, and head cap 107 constitute the lamp cover.

A rotary ring 108 is disposed between the pipe attachment 103 and the bottom cap 105 so as to surround the column 102. A bearing 109 is incorporated between the column 102 and the rotary ring 108, whereby the rotary ring 108 smoothly rotates about the column 102. A wind receiving member and a wipe member, which will be explained later, are secured to the rotary ring 108 and thereby move together.

A wiper cover 110 for holding a brush is firmly attached to the rotary ring 108 by a wiper cover attachment 111 so as to be parallel to the outer columnar face of the probe 106. To the wiper cover 110, a brush 112 is attached so as to come into contact with the outer columnar face of the lamp cover. The wiper cover 110 and the brush 112 constitute the wipe member. Also, a wind receiving member 113 having a wind receiving surface is attached to the wipe member such that the wind receiving surface becomes a plane perpendicular to a moving direction of the wipe member.

The streetlight 100 having the configuration mentioned above is assumed to be installed on a road, so that various substances floating in the air such as dust, dirt, particles in exhaust gases, and the like, droppings of birds, cobwebs, and so forth are likely to adhere to the outer surface of the lamp cover exposed to wind and weather, whereby there is a fear of the latter gradually getting soiled. If the exposed surface of probe 106 gets soiled and thereby lowers its transmittance to light, then the efficiency of illumination deteriorates.

In the streetlight 100, however, the wind receiving member 113 rotates such that the wind receiving surface thereof is oriented in a direction receiving no wind resistance, i.e., leeward, and the brush 112 moves on the outer columnar face of the lamp cover together with the wind receiving member 113 by way of the rotary motion of the rotary ring 108, whereby the soil attached onto the surface of lamp cover is eliminated while the brush 112 moves.

Once the wind receiving surface of the wind receiving member 113 is oriented leeward in the streetlight 100, its orientation is fixed unless the wind direction changes even when a strong wind is blowing. Therefore, no driving device works too intensely, whereby the cleaner operates moderately even when a driving device and the wipe member are connected to each other without the aid of a transmission.

On the other hand, the streetlight 100 is blown by a wind from every direction, so that the rotary ring 108 rotates over all the directions such that the wind receiving surface of the wind receiving member 113 is oriented in each direction, whereby the area in which the brush 112 moves while in contact with the outer columnar face of the lamp cover extends over the whole outer columnar face of the lamp cover.

As compared with an illumination apparatus equipped with a cleaner using a windmill as a driving device, the streetlight 100 is simpler in its structure in that the driving device and the wipe member are connected to each other without the aid of a transmission. Also, since the wind receiving member is directly attached to the wipe member without incorporating a link, the structure is further simpler. Hence, as compared with the illumination apparatus equipped with a cleaner using a windmill, the production cost is lower, and the cleaner is so inconspicuous that it does not damage the design of illumination apparatus.

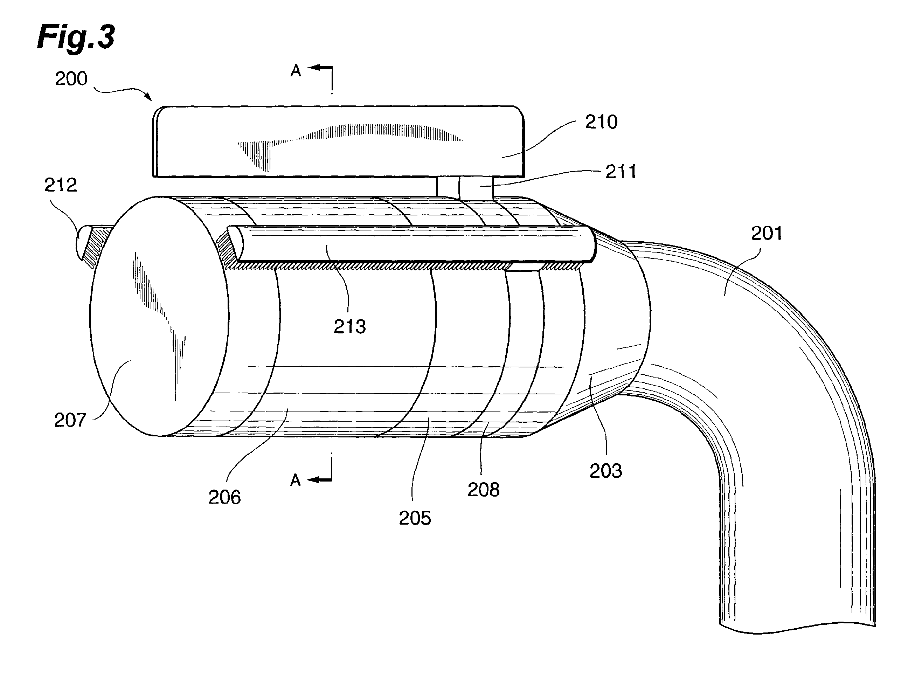

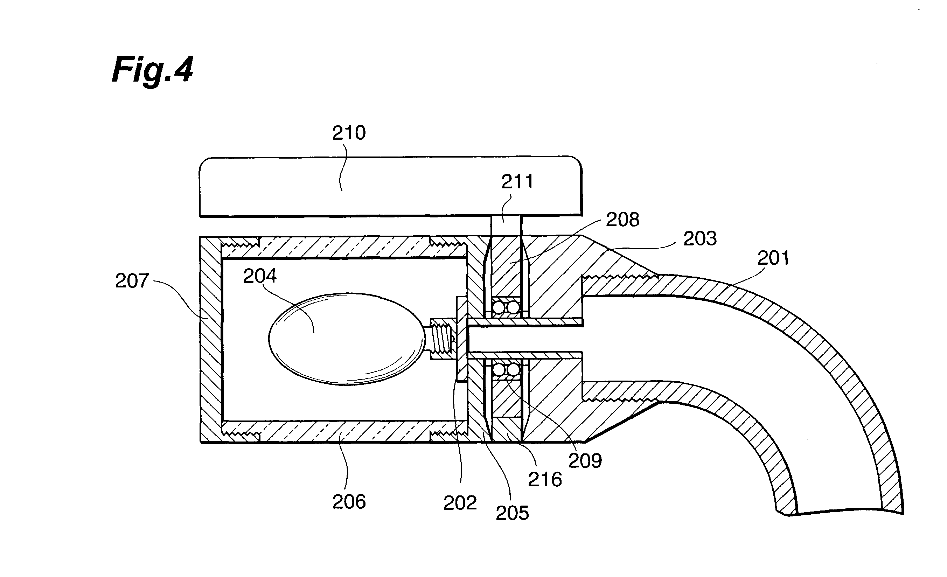

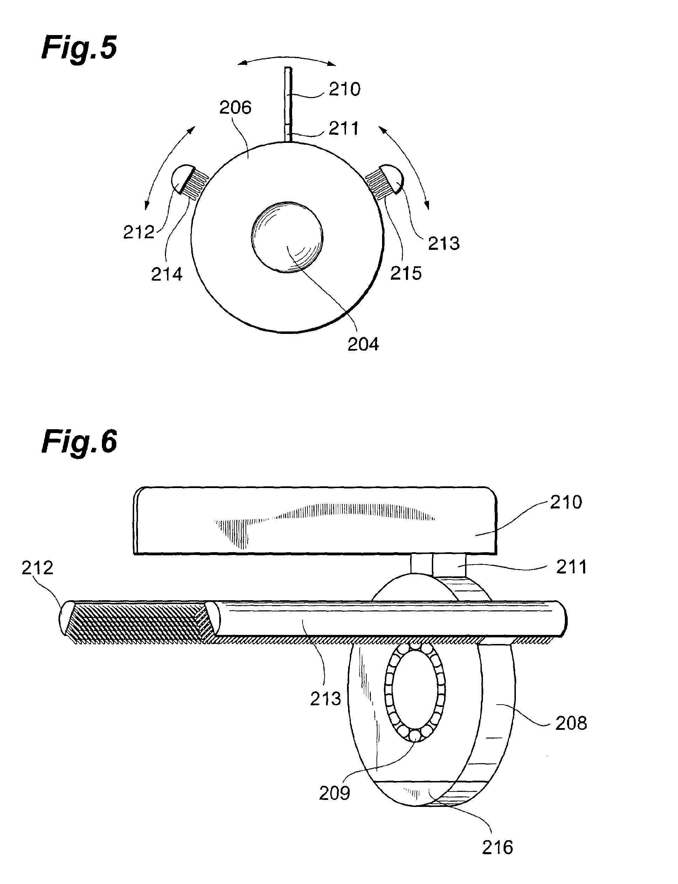

Fig. 3 is a perspective view showing the illumination apparatus equipped with a cleaner in accordance with a second embodiment of the present invention. Fig. 4 is a partly sectional view of the illumination apparatus equipped with a cleaner shown in Fig. 3. Fig. 5 is a partly sectional view taken along the line A-A of Fig. 3. Fig. 6 is a view showing a cleaner section alone taken out from the illumination apparatus equipped with a cleaner shown in Fig. 3. In a streetlight 200 exemplified here, a columnar lamp cover is provided horizontally. A column 202, which is a pillar for the lamp within the streetlight main body, is firmly attached to a streetlight mounting pipe 201, which is a pillar for the streetlight main body, by a pipe attachment 203, whereas a lamp 204 having a luminous body therewithin is attached to the leading end of the column 202. A bottom cap 205 for securing a probe, which will be explained later, is attached to the upper part of the columnar face of the column 202, whereby a cylindrical probe 206 is horizontally secured to the bottom cap 205. Through the probe 206, light generated by the luminous body is emitted to the outside. The leading part of probe 206 is covered with a head cap 207, whereby the probe 206, bottom cap 205, and head cap 207 constitute the lamp cover.

A rotary ring 208 is disposed between the pipe attachment 203 and the bottom cap 205 so as to surround the column 202. A bearing 209 is incorporated between the column 202 and the rotary ring 208, whereby the rotary ring 208 smoothly rotates about the column 202. A wind receiving member, a wipe member, and a weight, which will be explained later, are secured to the rotary ring 208 and thereby move together.

A wind receiving member 210 is firmly attached to the rotary ring 208 by a wind receiving member attachment 211 such that a wind receiving surface becomes a plane perpendicular to a moving direction of the wind receiving member attachment 211 in the rotary ring 208.

Wiper covers 212, 213 for holding respective brushes are firmly attached to the rotary ring 208 by a wiper cover attachment so as to become parallel to the outer columnar face of the probe 206 while a wide angle is formed between the wiper covers 212, 213. Brushes 214, 215 are attached to the wiper covers 212, 213, respectively, so as to come into contact with the outer columnar face of the lamp cover. Each wiper cover and the brush secured thereto constitute a wipe member.

A weight 216 is attached to the rotary ring 208. Since the rotary ring 208 has an axis of rotation parallel to the horizontal direction, the moving direction of weight 216 includes a vertical component.

When there is no wind, the rotary ring 208 in the streetlight 200 rotates to such an angle that the weight 216 is located at the lowest position in its movable range. When there is a wind, the rotary ring 208 rotates in a direction in which the gravity of the weight 216 and the force of wind pressure exerted on the wind receiving surface of the wind receiving member 210 are in balance. When the wind stops or weakens, a restoring force acts on the rotary ring 208 to such an angle that the gravity of the weight 216 and the altered wind pressure force exerted on the wind receiving surface of the wind receiving member 210 are in balance, whereby the rotary ring 208 keeps a pendulummotion. Together with the rotary ring 208, the wipe members move along the outer columnar face of lamp cover. Namely, the wipe members operate not only upon the rotary motion of rotary ring 208 in response to changes in the wind direction, but also upon the pendulum motion of rotary ring 208 at the time when the wind stops or weakens. This movement of wipe members eliminates the soil attached to the outer columnar face of the lamp cover.

When the weight 216 is set heavier, the rotary ring 208 in the streetlight 200 is hard to rotate to an angle in which the weight 216 moves upward. Since two wipe members are arranged so as to form a wide angle therebetween, however, the area cleaned by the operation of wipe members extends over the whole outer columnar face of the lamp cover.

Though the streetlight 200 has a simple structure in which a driving device is directly connected to the wipe members without the aid of a transmission, since the driving device does not work too intensely even when a strong wind blows, the wipe members operate moderately. Also, as mentioned above, the wipe members in the streetlight 200 efficiently clean the lamp cover while being powered not only by the wind force but also by the gravity of weight. Further, since the apparatus has a simple structure, its production cost is lower as compared with an illumination apparatus equipped with a cleaner using a windmill, and the cleaner is so inconspicuous that it does not damage the design of illumination apparatus.

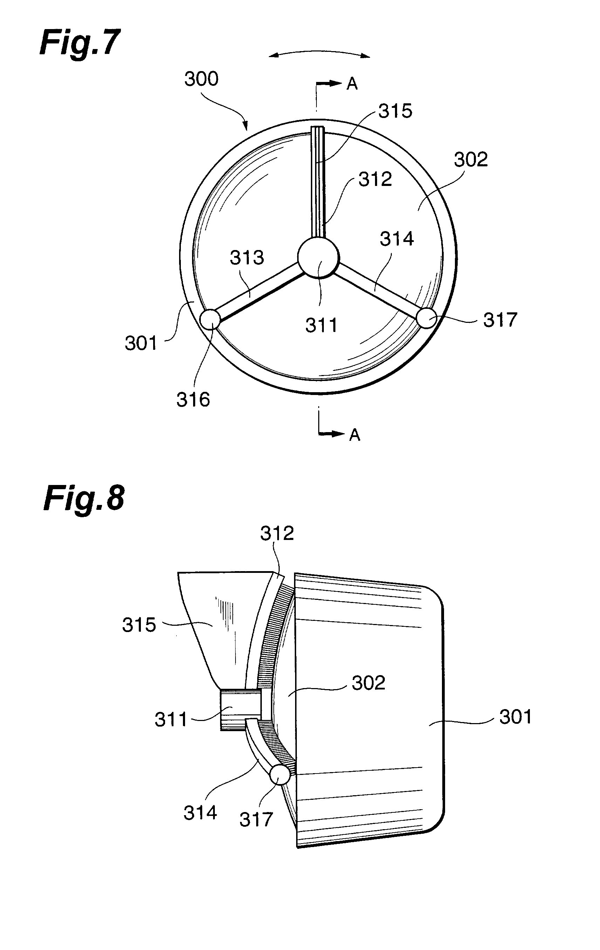

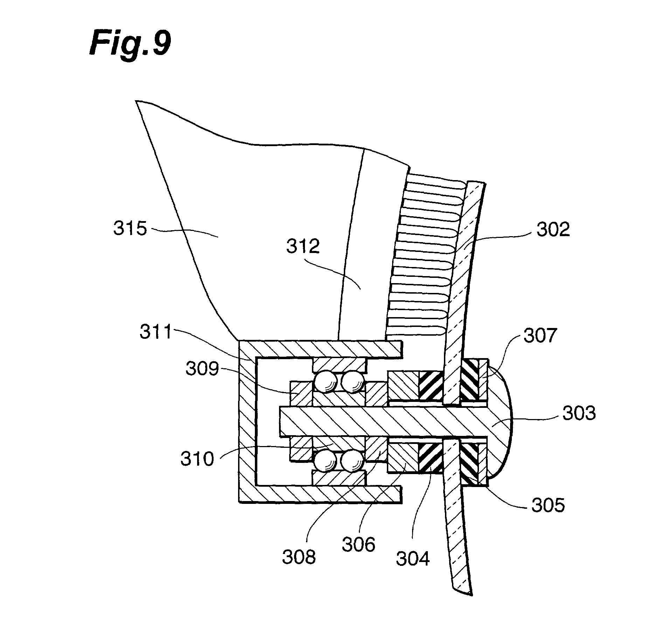

Fig. 7 is a front view showing the illumination apparatus equipped with a cleaner in accordance with a third embodiment of the present invention. Fig. 8 is a side view of the illumination apparatus equipped with a cleaner shown in Fig. 7. Fig. 9 is an enlarged partly sectional view of the illumination apparatus equipped with a cleaner shown in Fig. 7 taken along the line A-A. In an illumination apparatus 300 exemplified here, the cleaner cleans a glass cover installed such that the tangent plane at the center becomes a plane perpendicular to the horizontal direction. A luminous body is installed within a cover main body 301 which is a container with a circular rim, whereas the opening of the cover main body 301 is covered with a circular glass cover 302 having a protrusion at the center thereof.

A screw 303 is inserted into a tapped hole at the center of the glass cover 302. When rubber packings 304, 305 respectively installed on both sides of the glass cover 302 and washers 306, 307 respectively installed on their outside are fastened by the bearing surface of the screw 303 and a nut 308, the screw 303 is secured to the glass cover 302. A bearing 310 is secured to the screw 303 by nuts 308, 309, whereas a cylindrical rotor 311 having a bottom face on one port is installed so as to rotate smoothly about the screw 303 by way of the bearing 310. Wipe members, a wind receiving member, and weights are secured to the rotor 311 and thereby move together.

Wiper covers 312, 313, 314 for holding respective brushes are secured, with a wide angle therebetween, so as to extend along the outer surface of the glass cover 302.

Respective brushes are secured to the wiper covers 312, 313, 314 so as to come into contact with the outer surface of glass cover 302. Each wiper cover and the brush secured thereto constitute a wipe member.

A wind receiving member 315 is attached to the wiper cover 312 such that a wind receiving surface becomes a plane perpendicular to the moving direction of the wiper cover 312.

Weights 316, 317 are attached to the wiper covers 313, 314 at their ends opposite to the parts attached to the rotor, respectively. Since the screw 303 acting as the axis of rotation extends in a direction parallel to the horizontal direction, the moving direction of each of the weights 316, 317 includes a vertical component.

Based on the same principle as that in the streetlight 200 in accordance with the second embodiment of the present invention, the three wipe members clean the whole outer surface of the glass cover in the illumination apparatus 300. While the illumination apparatus 300 has a simple structure in which a driving device is directly connected to the wipe members without the aid of a transmission, the driving device does not work too intensely even when a strong wind blows, whereby the wipe members operate moderately. Also, as mentioned above, the wipe members in the illumination apparatus 300 efficiently clean the glass cover while being powered not only by the wind force but also by the gravity of weights. Further, since the apparatus has a simple structure, the production cost is lower as compared with an illumination apparatus equipped with a cleaner using a windmill, and the cleaner is so inconspicuous that it does not damage the design of illumination apparatus.

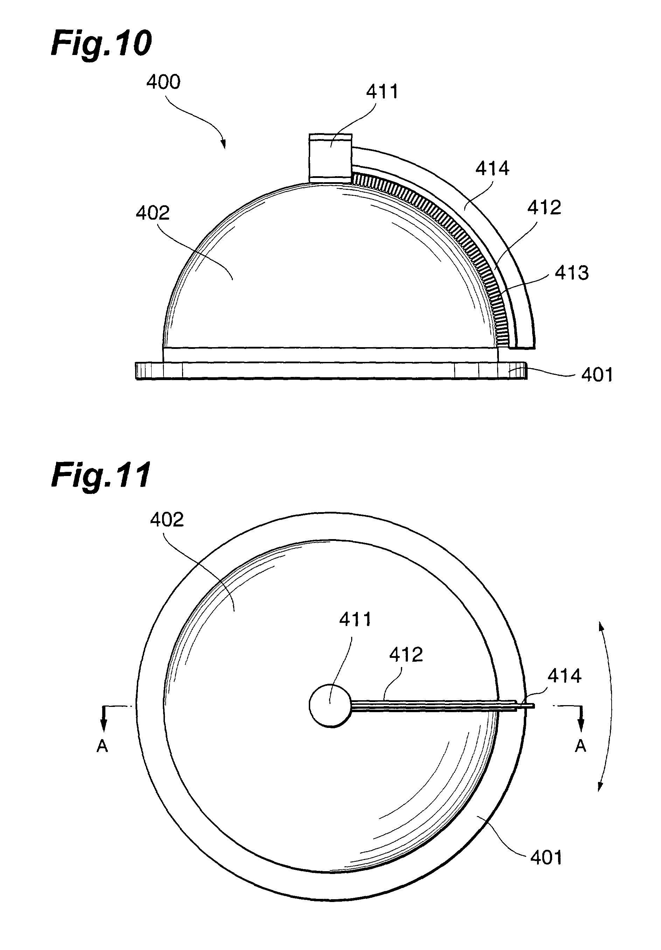

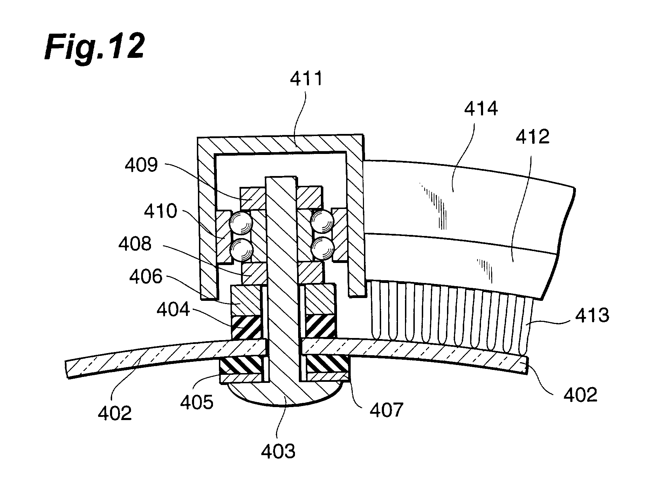

Fig. 10 is a side view showing the window equipped with a cleaner in accordance with a fourth embodiment of the present invention. Fig. 11 is a plan view of the window equipped with a cleaner shown in Fig. 10. Fig. 12 is an enlarged partly sectional view of the window equipped with a cleaner shown in Fig. 10 taken along the line A-A.

In a window 400 exemplified here, a dome-shaped window is installed such that the vertex thereof is directed upward. Onto a mounting base 401 for securing the window, a dome-shaped transmittance section 402 is secured. The transmittance section 402 is made of a transparent material, through which the external light is transmitted therein.

A screw 403 is inserted into a tapped hole at the vertex of the transmittance section 402. When rubber packings 404, 405 respectively installed on both sides of the transmittance section 402 and washers 406, 407 respectively installed on their outside are fastened by the bearing surface of the screw 403 and a nut 408, the screw 403 is secured to the transmittance section 402. A bearing 410 is secured to the screw 403 by nuts 408, 409, whereas a cylindrical rotor 411 having a bottom face on one port is installed so as to rotate smoothly about the screw 403 by way of the bearing 410. A wipe member and a wind receiving member are secured to the rotor 411 and thereby move together.

A wiper cover 412 for holding a brush is attached to the outer side of the rotor 411 so as to extend along the outer surface of the transmittance section 402. A brush 413 is attached to the wiper cover 412 so as to come into contact with the outer surface of the transmittance section 402. The wiper cover 412 and the brush 413 constitute the wipe member. A wind receiving member 414 is attached to the wiper cover 412 such that a wind receiving surface becomes a plane perpendicular to the moving direction of the wiper cover 412.

Based on the same principle as that in the streetlight 100 in accordance with the first embodiment of the present invention, the wipe member cleans the window surface in the window 400. While the driving device does not work too intensely even when a strong wind blows, the whole window surface is cleaned by the move of a wipe member directly connected with such driving device. Further, as compared with a window equipped with a cleaner using a windmill as its driving device, the window 400 has a simple structure in that the driving device is directly connected to the wipe member without the aid of a transmission. Also, the window 400 has a simpler structure in that the window receiving member is directly attached to the wipe member without incorporating a link. Further, since the apparatus has a simple structure, the production cost is lower as compared with a window apparatus equipped with a cleaner using a windmill, and the cleaner is so inconspicuous that it does not damage the design of windows.

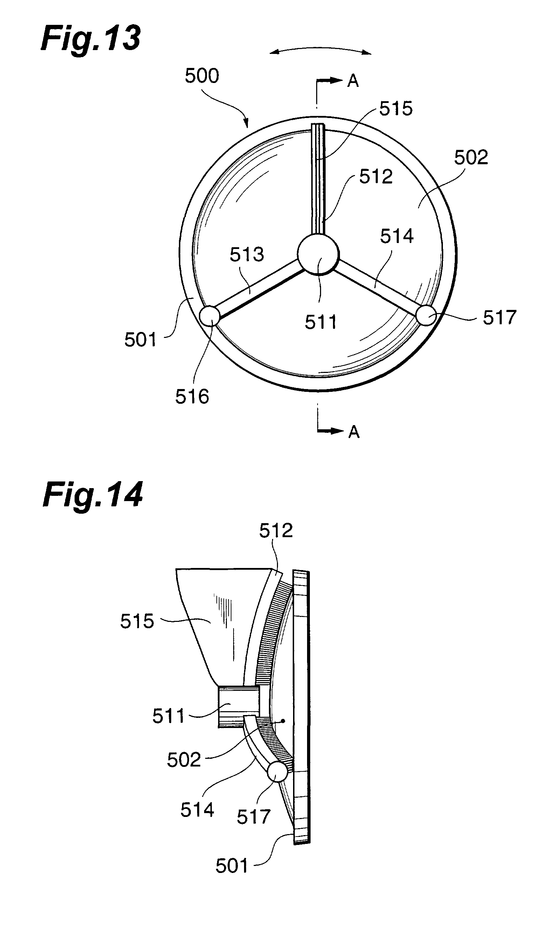

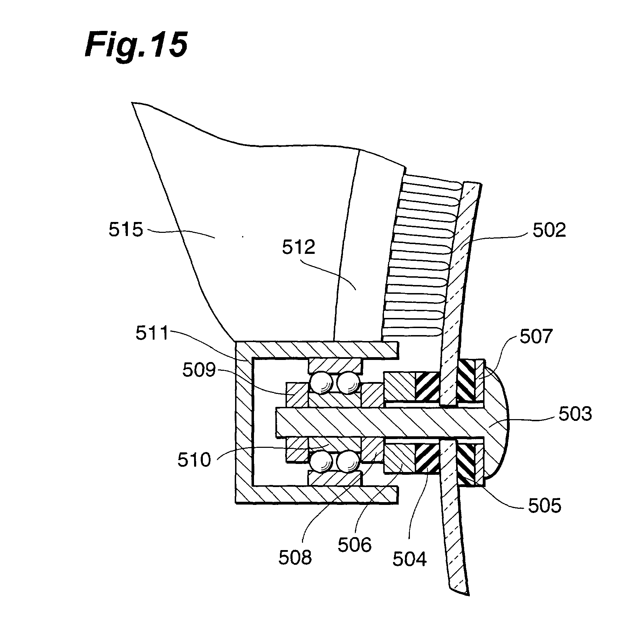

Fig. 13 is a front view showing the window equipped with a cleaner in accordance with a fifth embodiment of the present invention. Fig. 14 is a side view of the window equipped with a cleaner shown in Fig. 13. Fig. 15 is an enlarged partly sectional view of the window equipped with a cleaner shown in Fig. 13 taken along the line A-A. A window 500 exemplified here is installed on a wall face. A mounting base 501 for securing the window is installed at a window mounting portion of the wall face. A moderately protruded transmittance section 502 is secured onto the mounting base 501 such that the tangent plane at the center becomes a plane perpendicular to the horizontal direction. The transmittance section 502 is made of a transparent material, through which the external light is transmitted therein.

A screw 503 is inserted into a tapped hole at the vertex of the transmittance section 502. When rubber packings 504, 505 respectively installed on both sides of the transmittance section 502 and washers 506, 507 respectively installed on their outside are fastened by the bearing surface of the screw 503 and a nut 508, the screw 503 is secured to the transmittance section 502. A bearing 510 is secured to the screw 503 by nuts 508, 509, whereas a cylindrical rotor 511 having a bottom face on one port is installed so as to rotate smoothly about the screw 503 by way of the bearing 510. Wipe members, wind receiving members, and weights are secured to the rotor 511 and thereby move together.

Wiper covers 512, 513, 514 holding respective brushes are secured, with a wide angle therebetween, to the rotor 511 so as to extend along the outer surface of the transmittance section 502.

The respective brushes are secured to the wiper covers 512, 513, 514 so as to come into contact with the outer surface of the transmittance section 502. Each wiper cover and the brush connected thereto constitute a wipe member.

A wind receiving member 515 is attached to the wiper cover 512 such that a wind receiving surface becomes a plane perpendicular to the moving direction of the wiper cover 512.

Weights 516, 517 are attached to the wiper covers 513, 514 at their ends opposite to the parts attached to the rotor, respectively. Since the screw 503 acting as the axis of rotation extends in a direction parallel to the horizontal direction, the moving direction of each of the weights 516, 517 includes a vertical component.

Based on the same principle as that in the streetlight 200 in accordance with the second embodiment of the present invention, the three wipe members clean the whole outer surface of the transmittance section 502 in the window 500. While the window 500 has a simple structure in which a driving device is directly connected to the wipe members without the aid of a transmission, since the driving device does not work too intensely even when a strong wind blows, the wipe members operate moderately. Also, as mentioned above, the wipe members in the window 500 efficiently clean the transmittance section while being powered not only by the wind force but also by the gravity of weights. Further, since the apparatus has a simple structure, the production cost is lower as compared with a window equipped with a cleaner using a windmill, and the cleaner is so inconspicuous that it does not damage the design of window.

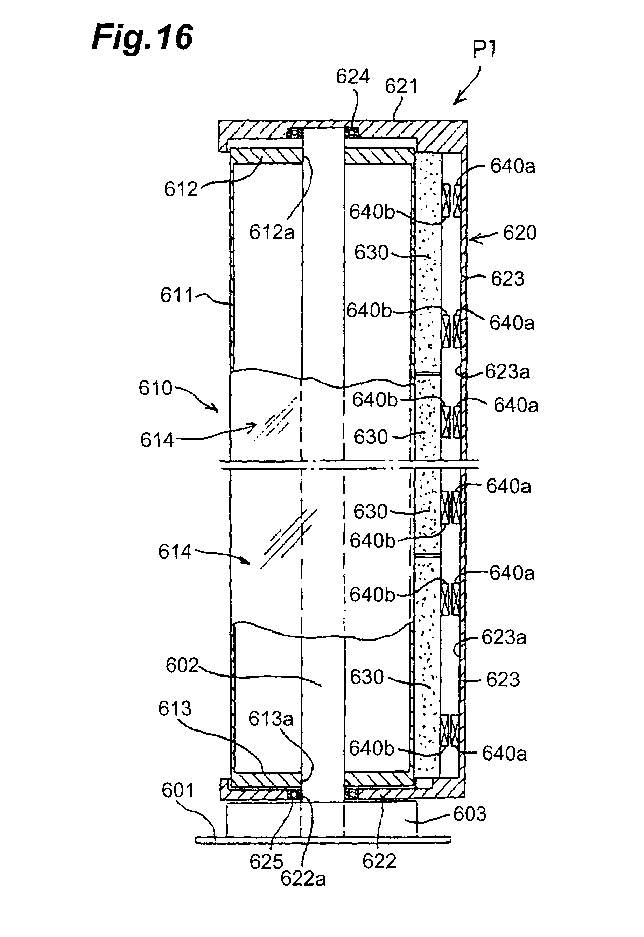

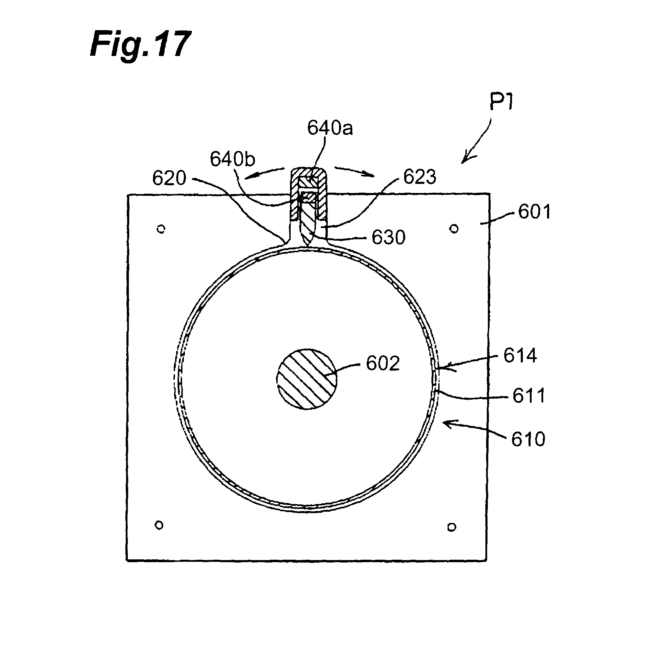

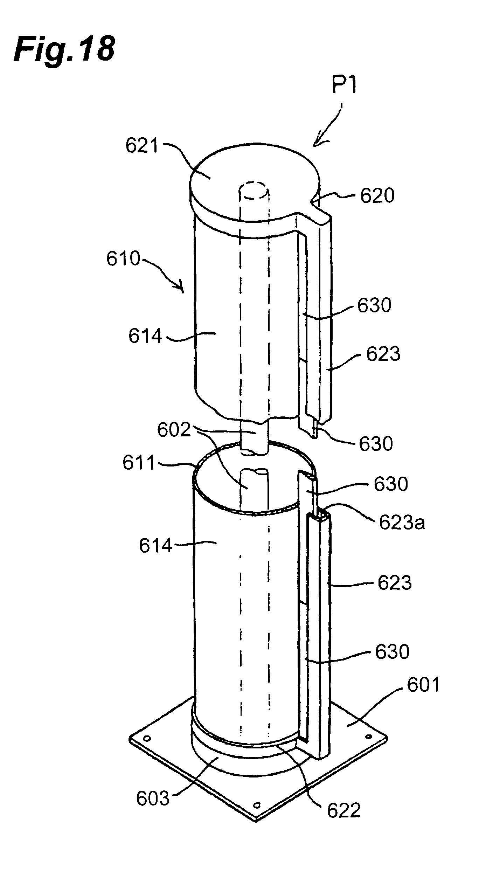

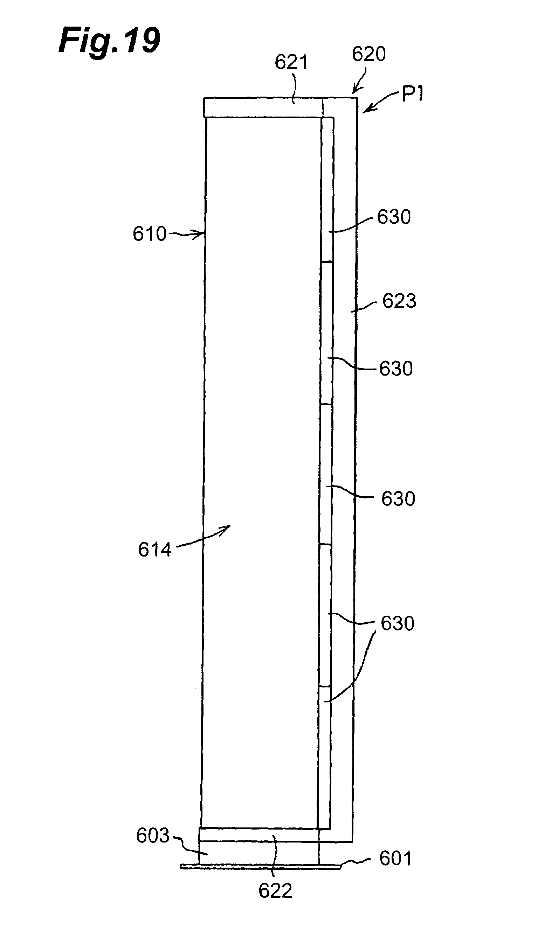

Figs. 16 to 19 conceptually show the road indication apparatus in accordance with a sixth embodiment of the present invention. A road indication apparatus P1 exemplified here is installed on the roadside such as a road shoulder or at the center part of a road such as a center strip, and comprises a support shaft 602 on the upper face of a base plate 601. The support shaft 602 has a columnar shape with a small diameter and extends vertically upward from the center part of the base plate 601 having a rectangular sheet form.

The support shaft 602 is provided with a display member 610 having a columnar form. The display member 610 comprises a cylindrical peripheral wall portion 611, and upper and lower wall portions 612, 613 closing the upper and lower end faces of the peripheral wall portion 611, respectively, thereby forming a hollow shape. The display member 610 is secured to the support shaft 602 while in a state where the support shaft 602 penetrates through and is held by fitting holes 612a, 613a formed at the respective center parts of the upper and lower wall portions 612, 613.

In the display member 610, the whole cylindrical surface area of the peripheral wall portion 611 is provided with a display section 614. Though not clearly shown in the drawing, the display section 614 displays indicators constituted by letters, graphics, and/or characteristic colors according to information to be provided to road passengers. Preferably, the display section 614 employs a reflecting member in view of the visibility in the dark and at night, so as to positively reflect the external light such as headlights, or employs a transparent member made of glass, resin, or the like, or a semitransparent member, so as to transmit therethrough an inner light source such as fluorescent lamp or the introduced external light. In each case, however, it is preferred that the surface of display section 614 be constructed as a smooth surface.

In the drawings, numeral 603 refers to a connection ring for reinforcing the link between the support shaft 602 and the base plate 601.

On the other hand, the road indication apparatus P1 comprises a rotary member 620. In the rotary member 620, an upper plate portion 621, a lower plate portion 622, and a wind receiving member 623 are integrally molded. The upper plate portion 621 has a substantially disk-like shape slightly larger than the upper wall portion 612 of the display member 610, and is arranged rotatable at the upper end part of the support shaft 602 byway of an upper bearing 624 disposed in the lower face at the center part thereof. The lower plate portion 622 has a substantially disk-like shape identical to that of the upper plate portion 621, whereas a through hole 622a is formed at the center part thereof. The lower plate portion 622 is arranged rotatable between the connection ring 603 and the lower wall portion 613 of the display member 610 by way of a lower bearing 625 disposed in the through hole 622a. The wind receiving member 623 has a columnar form longer than the display member 610, and extends along the axial direction of the display member 610 at a position slightly distanced from the peripheral wall portion 611 of the display member 610, thereby connecting the peripheral face of the upper plate portion 621 and the peripheral face of the lower plate portion 622 to each other.

In the rotary member 620, the wind receiving member 623 is provided with an accommodation groove 623a. The accommodation groove 623a is a single linear recession formed along the axial direction of the display member 610 at a location of the display member 610 opposing the display section 614, and accommodates and holds a plurality of wiper blades 630 in series therewithin. Each wiper blade 630 is molded from an elastic synthetic resin having a softness and elasticity such as rubber, whereas one end part thereof forms a pointed shape, so as to fit into the accommodation groove 623a in a state where each pointed end part opposes the surface of display section 614 and is able to advance in the accommodation grave 633a and retract therefrom. The wiper blades 630 and the portion of the wind receiving member 623 holding the wiper blades 630 constitute a wipe member.

A plurality of pairs of permanent magnets 640a, 640b are disposed between the accommodation groove 623a of the wind receiving member 623 and each wiper blade 630. Each pair of permanent magnets 640a, 640b are respectively attached to the inner wall of the accommodation groove 623a and the base end face of the wiper blade 630 such that the same magnetic poles oppose each other, whereby each pointed part of the wiper blade 630 is pressed against the surface of display section 614 due to magnetic repulsive forces acting on each other.

The road indication apparatus P1 having the configuration mentioned above is configured so as to have such an outer size that the total height is about 1290 mm whereas the diameter of the display member 610 is about 200 mm. By way of the base plate 601, the road indication apparatus P1 is installed on the roadside such as a road shoulder or at the center part of a road such as a center strip. The road indication apparatus P1 functions to provide road passengers with desirable information through indicators of the display section 614.

The display section 614 in the road indication apparatus P1 is also gradually soiled while being exposed to wind and weather, splashes of mud from running vehicles, oil contents and the like contained in the exhaust gas discharged from vehicles, and so forth, whereby there is a fear of its visibility to road passengers gradually decreasing.

When a wind blows, however, the wind receiving surface of the wind receiving member 623 receives the wind, so that the rotary member 620 appropriately rotates about the axis of the display member 610, whereby the pointed end of each wiper blade 630 held by the wind receiving member 623 of the rotary member 620 slides in contact with the surface of the display section 614. As a result, even in the display section 614 having a relatively large area extending over the whole cylindrical surface of the peripheral wall portion 611 in the display member 610, foreign matters such as mud and oil contents attached to the surface thereof are eliminated by the wiper blades 630, whereby the visibility of the display section 614 can be restored. This action is automatically performed in response to changes in the wind direction. Therefore, without requiring any labor or cost, the road indication apparatus P1 can maintain a desirable visibility in the display section 614.

Also, the rotary member 620 of the road indication apparatus P1 appropriately changes its orientation so as to minimize the resistance of the wind receiving surface of the wind receiving member 623 against winds, whereby it does not continuously rotate at a high speed even when a strong wind is blowing during a rainstorm such as a typhoon. Namely, the rotary member 620 simply rotates about the axis of the display member 610 such that the wind receiving member 623 is always positioned leeward.

Since the wind receiving member 623 moves intermittently in a moderate manner, the surface of display section 614 and the pointed end part of each wiper blade 630 are prevented from sliding against each other in excess even when the wind receiving member 623 and the wiper blade 630 are connected to each other so as to move together. The road indication apparatus P1 is not only thus simple in its structure, but also quite advantageous in terms of durability. Further, since the wind receiving member 623 neither disrupts the visibility of the display section 614 nor unnecessarily attracts attention, road passengers can reliably see the display of the display section 614.

Wind blowing around the road indication apparatus P1 constantly changes the direction due to the turbulence occurring under the influence of guard rails, sound proof walls, and the ground existing in the vicinity of the road indication apparatus P1 and the influence of running vehicles. Therefore, the wiper blades 630 held by the wind receiving member 623 keep sliding on the surface of display section 614 intermittently.

Though the sixth embodiment exemplifies a wiper blade having a blade form molded from a resin material as a cleaning section for the wiper member, those in other forms such as brush, washcloth, and the like, for example, can also be employed as long as they can move relative to the display section so as to eliminate foreign matters attached to the display section. Since a plurality of blades are arranged in series in the sixth embodiment, if replacement is necessary due to wear and the like, then only worn ones can be replaced instead of replacing all of them at once, whereby the running cost can be lowered. However, continuous ones may also be employed as the cleaning section. While magnetic repulsive forces are utilized for pressing the cleaning section against the surface of display section, elastic means such as a spring, for example, may be employed so as to press the cleaning section against the display section by utilizing its elastic force as a matter of course.

Though the sixth embodiment employs a columnar display member while the whole cylindrical surface of its peripheral wall portion is provided with the display section, the present invention is not restricted thereto. For example, the display section may be constructed in only a part of the cylindrical surface of the columnar display member, or in an arc-shaped peripheral surface of a pillar member having a sector or semicircular transverse face. In these cases, it will be sufficient if means for restricting the moving range of a wiper blade is provided such that the wiper blade comes into slidable contact with only the surface of display section. When the display section bulges like a barrel or dents, similar operations and effects can be expected if wiper member is placed in such state that the orbit of movement thereof extends along such surface. Though one carrying out display through indicators is exemplified as the display section, the present invention is also applicable to a display section simply constituted by a reflecting mirror as a matter of course.

Though the display member is installed such that its axis extends along the vertical direction in the sixth embodiment, it is not always necessary to do so.

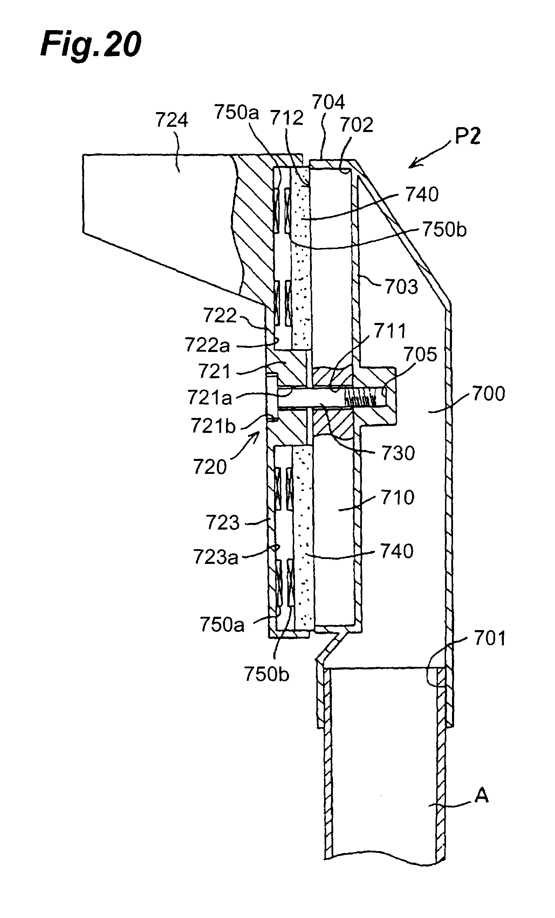

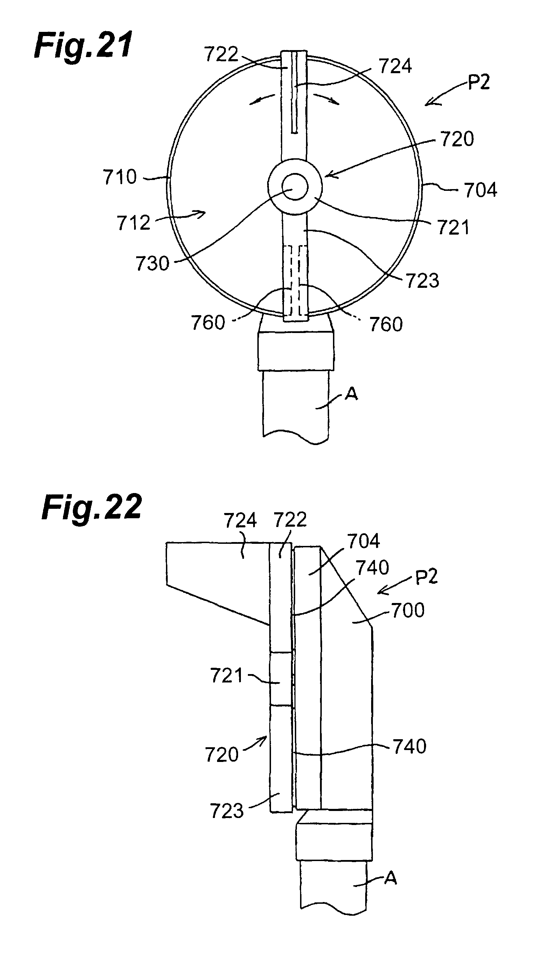

Figs. 20 to 22 show the road indication apparatus in accordance with a seventh embodiment of the present invention. A road indication apparatus P2 exemplified here is installed on the roadside such as a road shoulder or at the center part of a road such as a center strip as in the sixth embodiment.

As can be seen from the drawings, the road indication apparatus P2 comprises a base 700 at the upper end part of a mounting pole A vertically disposed at a site of installation. The base 700 is attached to the mounting pole A by way of a mounting hole 701 and has an accommodation recess 702 at the front face thereof. The accommodation recess 702 is constructed by providing the whole periphery of a disk-shaped bottom wall portion 703 with an annular peripheral wall 704, and has a screw fastening hole 705 at the center part of the bottom wall portion 703.

The accommodation recess 702 accommodates and holds a display member 710 therewithin. The display member 710 has a disk-like shape having a size fitting into the accommodation recess 702 and has a screw insertion hole 711 at a part corresponding to the screw fastening hole 705, whereas a display section 712 is constructed on the surface of display member 710. Though not clearly shown in the drawing, the display section 712 displays indicators according to information to be provided to road passengers and is constituted by letters, graphics, and/or characteristic colors. Preferably, the display section 712 employs a reflecting member in view of the visibility in the dark and at night, so as to positively reflect the external light such as headlights, or employs a transparent member made of glass, resin, or the like, or a semitransparentmember, so as to transmit therethrough an inner light source such as fluorescent lamp or the introduced external light. In each case, however, it is preferred that the surface of display section 712 be constructed as a smooth surface.

On the other hand, the road indication apparatus P2 comprises a swivel member 720. The swivel member 720 comprises an axis portion 721, a pair of swivel portions 722, 723, and a single wind receiving member 724. The axis portion 721 is a part having a columnar form with a diameter greater than that of the screw insertion hole 711 of the display member 710. The axis portion 721 has a screw insertion hole 721a and a head accommodation hole 721b at the axial center part thereof. When a screw 730 is fastened to the screw fastening hole 705 of the accommodation recess 702 by way of the head accommodation hole 721b and screw insertion hole 721a and further by way of the screw insertion hole 711 of the display member 710, the axis portion 721 can rotate about the axis of the screw 730 . The pair of swivel portions 722, 723 are rectangular column-shaped parts extending away from each other along the surface of display section 712 from the peripheral face of axis portion 721. The swivel portions 722, 723 are provided with accommodation grooves 722a, 723a, respectively. The accommodation grooves 722a, 723a are formed at respective parts opposing the display section 712, and each accommodate and hold a wiper blade 740 therewithin. Each of the swivel portions 722, 723 and the wiper blade held thereby constitute a wipe member. Each wiper blade 740 is molded from a synthetic resin material having a softness and elasticity such as rubber, whereas one end part thereof forms a pointed shape. A plurality of pairs of permanent magnets 750a, 750b are disposed between the accommodation groove 722a, 723a of each swivel portion 722, 723 and its wiper blade 740. Each pair of permanent magnets 750a, 750b are respectively attached to the inner wall of the accommodation groove 722a, 723a and the base end face of the wiper blade 740 such that the same magnetic poles oppose each other, whereby each pointed part of the wiper blade 740 is pressed against the surface of display section 712 due to magnetic repulsive forces acting on each other. The wind receiving member 724 is a planar member extending outward from the outer surface of one swivel portion 722.

A weight 760 is attached to the swivel portion 723. Since the screw 730 acting as the axis of rotation is parallel to the horizontal direction, the moving direction of weight 760 includes a vertical component.

When there is no wind, the axis portion 721 in the road indication apparatus P2 rotates to such an angle that the weight 760 is located at the lowest position in its movable range. When there is a wind, the axis portion 721 rotates in a direction in which the gravity of the weight 760 and the force of wind pressure exerted on the wind receiving surface of the wind receiving member 724 are in balance. When the wind stops or weakens, a restoring force acts on the axis portion 721 to such an angle that the gravity of the weight 760 and the altered wind pressure force exerted on the wind receiving surface of the wind receiving member 724 are in balance, whereby the axis portion 721 keeps a pendulum motion. Together with the axis portion 721, the wiper blades 740 move while coming into contact with the surface of display section 712 under pressure. Namely, the wiper blades 740 operate not only upon the rotary motion of axis portion 721 in response to changes in the wind direction, but also upon the pendulum motion of axis portion 721 at the time when the wind stops or weakens. This movement of wiper blades 740 eliminates the soil attached to the surface of display section 712.

Though the road indication apparatus P2 has a simple structure in which a driving device is directly connected to the wipe members without the aid of a transmission, since the driving device does not work too intensely even when a strong wind blows, the wipe members directly connected with the driving device operate moderately. As mentioned above, the wipe members in the road indication apparatus P2 efficiently clean the surface of display section 712 while being powered not only by the wind force but also by the gravity of weight. Also, the road indication apparatus P2 is simpler in its structure in that the wind receiving member is directly attached to the wipe members without incorporating a link. Further, since the apparatus has a simple structure, its production cost is lower as compared with a road indication apparatus equipped with a cleaner using a windmill, and the cleaner is so inconspicuous that it does not damage the design of road indication apparatus.

The surface of display section 712 and the pointed end part of each wiper blade 740 are prevented from sliding against each other in excess, whereby the apparatus is quite advantageous in terms of the durability of each member. Further, since the swivel portions 722, 723 of the swivel member 720 neither deteriorate the visibility of the display section 712 nor unnecessarily attract attention, road passengers can reliably see the display of the display section 712.

Wind blowing around the road indication apparatus P2 constantly changes the direction due to the turbulence occurring under the influence of guard rails, sound proof walls, and the ground existing in the vicinity of the road indication apparatus P2 and the influence of running vehicles. Therefore, the wiper blade 740 of the swivel portions 722, 723 keeps sliding on the surface of display section 614 intermittently.

Though the seventh embodiment exemplifies a wiper blade having a blade form molded from a resin material as a cleaning section for the wiper member, those in other forms such as brush, washcloth, and the like, for example, can also be employed as long as they can move relative to the display section so as to eliminate foreign matters attached to the display section. While magnetic repulsive forces are utilized for pressing the cleaning section against the surface of display section, elastic means such as a spring may be employed so as to press the cleaning section against the display section by utilizing its elastic force as a matter of course.

Though the seventh embodiment employs a disk-shaped display member, it is not always necessary for the outer form to be circular, and the outer form can appropriately be changed to a triangular or quadrangular form, a sector form, or the like according to indicators to be displayed. When any of these display members is employed, the display section is not required to be flat but may be a recessed or protruded surface. Also, the display section may be provided with a plurality of swivel members. Though one carrying out display through indicators is exemplified as the display section, the present invention is also applicable to a display section simply constituted by a reflecting mirror as a matter of course.

Though the display section is installed such that its center axis is oriented horizontal in the seventh embodiment, the mode of installation is not restricted thereto.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. An illumination apparatus equipped with a cleaner, said apparatus comprising a wind receiving member, having a wind receiving surface, adapted to rotate when a wind is received by said wind receiving surface; and a wipe member linked to said wind receiving member so as to be operable together with said wind receiving member while in contact with a cover disposed about a luminous body.

2. An illumination apparatus equipped with a cleaner according to claim 1, further comprising a weight which is vertically movable in synchronization with said wind receiving member and said wipe member.

3. An illumination apparatus equipped with a cleaner according to claim 1, wherein said wind receiving member is attached to said wipe member.

4. A window equipped with a cleaner, said window comprising a wind receiving member, having a wind receiving surface, adapted to rotate when a wind is received by said wind receiving surface; and a wipe member linked to said wind receiving member so as to be operable together with said wind receiving member while in contact with a surface of said window.

5. A window equipped with a cleaner according to claim 4, further comprising a weight which is vertically movable in synchronization with said wind receiving member and said wipe member.

6. A window equipped with a cleaner according to claim 4, wherein said wind receiving member is attached to said wipe member.

7. A road indication apparatus equipped with a cleaner, said road indication apparatus comprising a wind receiving member, having a wind receiving surface, adapted to rotate when a wind is received by said wind receiving surface; and a wipe member linked to said wind receiving member so as to be operable together with said wind receiving member while in contact with a surface of a display section.

8. A road indication apparatus equipped with a cleaner according to claim 7, further comprising a weight which is vertically movable in synchronization with said wind receiving member and said wipe member.

9. A road indication apparatus equipped with a cleaner according to claim 7, wherein said wind receiving member is attached to said wipe member.
